# EUROPÄISCHE PATENTSCHRIFT

(11) **EP 2 075 074 B1**
(45) Veröffentlichungstag und Bekanntmachung des Hinweises auf die Patenterteilung: **19.10.2011**
(21) Anmeldenummer: 09155249.7
(22) Anmeldetag: 04.05.2007
(51) Int. Cl.: B05B 15/04

(54) **Maskierungssystem zur Maskierung eines Kurbelraums einer Brennkraftmaschine**
Masking system for masking a crank case for a combustion engine
Système de masquage destiné au masquage d'un espace de vilebrequin d'un moteur à combustion interne

(30) Priorität: 24.07.2006 EP 06117756
(43) Veröffentlichungstag der Anmeldung: 01.07.2009
(62) Teilanmeldung aus: 07405133.5
(73) Patentinhaber: Sulzer Metco AG, 5610 Wohlen (CH)
(72) Erfinder: Bohnheio, Christian, 5607, Hägglingen (CH); Barbezat, Gérard, 8404, Winterthur (CH)
(74) Vertreter: Sulzer Management AG

(56) Entgegenhaltungen:
- EP-A- 0 641 875
- EP-A- 0 733 792
- EP-A- 1 685 910
- JP-A- 2006 291 336

## Beschreibung

Die Erfindung betrifft ein Maskierungssystem zur Maskierung eines Kurbelraums einer Brennkraftmaschine während einer Oberflächenbehandlung einer Zylinderlauffläche, sowie die Verwendung eines erfindungsgemässen Markierungssystems gemäss dem Oberbegriff des unabhängigen Anspruchs der jeweiligen Kategorie.

Das thermische Beschichten von Zylinderlaufflächen von Verbrennungsmotoren durch verschiedene thermische Spritzverfahren ist heutzutage Stand der Technik und findet insbesondere bei Motoren für Kraftfahrzeuge aller Art, aber nicht nur hier, breite Anwendung. Dabei werden gewöhnlich die entsprechenden Zylinderlaufflächen durch verschiedene Verfahren vor dem thermischen Beschichten aktiviert, z.B. durch Korundstrahlen, Hartgussstrahlen, Hochdruckwasserstrahlen, diverse Laserverfahren oder durch andere an sich bekannte Aktivierungsverfahren. Am häufigsten werden dabei Substrate aus leichtmetallischen Legierungen auf Al oder Mg Basis vorbehandelt und anschliessend beschichtet.

Ein weit verbreiteter Typ von Motoren sind Motoren in V-Bauweise, also Motoren, die zwei zueinander parallel verlaufende Zylinderreihen aufweisen, wobei die zwei Längsachsen von zwei benachbarten Zylinderbuchsen, die jeweils zu einer der beiden Zylinderreihen gehören, um einen bestimmten Winkel gegeneinander geneigt sind, wodurch die charakteristische V-Form des Motorblocks eines Motors in V-Bauweise entsteht.

Bei solchen V-Motoren besteht beim thermischen Beschichten die Gefahr, dass während einer Oberflächenbehandlung der Zylinderlaufflächen, z.B. beim Aktivieren, Reinigen oder einer anderen Vorbehandlung der Zylinderlaufflächen, z.B. Oberflächen des Kurbelraums des Motorblocks oder Zylinderlaufflächen benachbarter Zylinderbohrungen in unkontrollierter Weise in Mitleidenschaft gezogen werden. Entsprechende Probleme treten vor allem auch beim thermischen Beschichten der Zylinderwand eines Zylinders der Brennkraftmaschine auf. Beim Beschichten einer Zylinderlauffläche einer Zylinderbohrung einer ersten Zylinderreihe können nämlich auf der Zylinderwand eines benachbarten Zylinders Dämpfe, z.B. Metalldämpfe des Beschichtungsmaterials, die beim thermischen Beschichten nie ganz zu vermeiden sind, abgeschieden werden.

Durch die Abscheidung der Metalldämpfe an den relativ kalten Wänden auf der Zylinderwand des Zylinders z.B. der zweiten Zylinderreihe, wird diese Zylinderwand in der zweiten Zylinderreihe durch die Metalldämpfe kontaminiert, was unter anderem eine negative Wirkung auf die Haftung einer später auf diesen Zylinder ebenfalls noch aufzubringenden Beschichtung hat. Zudem ist eine Kontamination durch ungeschmolzene Partikel und Overspray zu befürchten und auch die inneren Oberflächen des Kurbelgehäuses können in nachteiliger Weise kontaminiert bzw. in Mitleidenschaft gezogen werden.

Ein weiteres Problem ist die Erwärmung des Motorblocks durch den thermischen Beschichtungsvorgang. Da der Unterschied im Wärmeausdehnungskoeffizient zwischen thermischer Spritzschicht und Substrat relativ hoch sein kann, hat eine Temperatur des Substrats oberhalb von 120°C, worunter im wesentlichen eine Art mittlere Temperatur des Motorblocks zu verstehen ist, eine negative Wirkung auf das Eigenspannungsniveau der Schichten und oberhalb von 150°C besteht gar die Gefahr, dass das aus einer Leichtmetalllegierung gefertigte Bauteil, also der Motorblock, einen Verzug des Materials erleidet und damit unbrauchbar wird.

Diese Problematik wird besonders deutlich, wenn man die thermischen Ausdehnungskoeffizienten typischer verwendeter Materialien betrachtet: typische Ausdehnungskoeffizienten thermischer Spritzschichten aus Eisenbasis-Legierungen liegen z.B. bei ca. 11x10⁻⁶/°C, während typische thermische Ausdehnungskoeffizienten von Aluminium basierten Substraten bei ca. 23x10⁻⁶/°C und bei Magnesium basierten Substraten typischerweise bei 27x10⁻⁶/°C liegen können. Das heisst, typische thermische Ausdehnungskoeffizienten der Substrate, also des Materials aus dem die Motorblöcke gefertigt sind, sind grössenordnungsmässig mehr als doppelt so gross wie die thermischen Ausdehnungskoeffizienten der aufgespritzten thermischen Spritzschichten.

Im Stand der Technik sind verschiedene Vorrichtungen bekannt, die insbesondere das Problem der Kontamination von Zylinderlaufflächen mit den zuvor erwähnten Metalldämpfen zu lösen versuchen.

So sind Vorrichtungen bekannt, bei welchen Zylinderbohrungen, die nicht beschichtet werden, mit einer Art aufblasbarem Ballon versiegelt werden, was jedoch zu Wärmestaus führen kann und die oben erwähnten Probleme mit den thermischen Ausdehnungskoeffizienten noch verschärft. Es sind andere Systeme in Gebrauch, bei welchen durch das Kurbelwellengehäuse Abdeckungen zum Schutz der nicht zu beschichtenden Zylinderbohrungen eingeführt werden. Auch hier sind letztlich die thermischen Probleme nicht vollständig gelöst und, was mindestens ebenso wichtig ist, die Verwendung aller bekannten Systeme ist nur sehr schwer oder gar nicht zu automatisieren, insbesondere im Fall von Motoren der V-Bauweise, so dass der Beschichtungsprozess letztlich sehr teuer wird, weil viel Handarbeit bei der Beschichtung einer grossen Zahl von Motorblöcken notwendig ist.

Die Aufgabe der Erfindung ist es daher, eine Vorrichtung zur Verfügung zu stellen, mit welcher die aus dem Stand der Technik bekannten Probleme, insbesondere die thermischen Probleme und die Probleme mit der Kontamination durch Metalldämpfe beim thermischen Beschichten von Zylinderbohrungen von Brennkraftmaschinen vermieden werden, wobei gleichzeitig einfach und kostengünstig ein hoher Automatisierungsgrad erreichbar ist.

Die diese Aufgaben lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Die Erfindung betrifft somit ein Maskierungssystem zur Maskierung eines Kurbelraums einer Brennkraftmaschine während einer Oberflächenbehandlung einer Zylinderlauffläche einer Zylinderbohrung eines Zylinders der Brennkraftmaschine. Das Maskierungssystem umfasst einen hohlen Maskierungskörper mit einem Anschlusssegment zum Anschluss des hohlen Maskierungskörpers an die Zylinderbohrung, sowie ein Abschirmsegment. Erfindungsgemäss ist der hohle Maskierungskörper derart ausgestaltet, dass der hohle Maskierungskörper während der Oberflächenbehandlung eines ersten Zylinders der Brennkraftmaschine kurbeiraumseitig mit dem Anschlusssegment an der Zylinderbohrung des ersten Zylinders platzierbar ist.

Bei der Beschichtung von Zylinderkurbelgehäusen in V-Bauweise wird jeweils bevorzugt eine Zylinderreihe mittels einem rotierenden thermischen Spritzgerät, zum Beispiel mittels eines rotierenden Plasmabrenners beschichtet. Die nicht zu beschichtenden Zylinder werden dabei durch ein erfindungsgemässes Maskierungssystem derart geschützt, dass z.B. ein Plasmastrahl einer rotierenden Plasmaspritzvorrichtung, die in axialer Richtung beim Beschichten durch eine Zylinderbohrung geführt wird, wobei ein unterer Umkehrpunkt im Bereich des Maskierungskörpers liegen kann, die Zylinderwände der nicht zu beschichtenden Zylinderreihe nicht erreicht. Das heisst es kommt nicht zu dem gefürchteten "Overspraying", also der Kontamination einer nicht zu beschichtenden Zylinderwand durch Übersprühen aus einer Zylinderbohrung, die aktuell beschichtet wird. Dadurch wird verhindert, dass es zu Schichtablösungen kommt, wie sie aus dem Stand der Technik bekannt sind, was auftritt, wenn eine zuvor mit Metalldämpfen kontaminierte Zylinderwand später beschichtet wird.

Wesentlich für die Erfindung ist, dass der Maskierungskörper einerseits ein hohler Maskierungskörper ist, der so von Kühl- und Spülfluiden während einer Oberflächenbehandlung, wie zum Beispiel beim Aktivieren der Zylinderlaufflächen durch ein Stahlverfahren oder beim thermischen Beschichten der Zylinderlaufflächen durchströmt werden kann und durch den andererseits auch die Behandlungsvorrichtung, also zum Beispiel eine Wasserstrahlvorrichtung oder ein rotierender Plasmabrenner geführt werden kann.

Dadurch kann durch das Fluid zum Beispiel beim thermischen Beschichten entstehende Wärme sicher abgeführt werden und andererseits kann durch das Fluid, das zum Beispiel Luft, ein chemisch aktives Gas wie Sauerstoff und / oder ein Inertgas wie Stickstoff und / oder ein Edelgas und / oder ein anderes Fluid sein kann, auch verhindert werden, dass Metalldämpfe oder Strahlpartikel, die beim Aktivieren der Zylinderlaufflächen eingesetzt werden oder andere schädliche Kontaminationen durch den Kurbelraum zuverlässig abgeführt werden, ohne dass z.B. innere Oberflächen des Kurbelgehäuses oder Zylinderlaufflächen negativ beeinflusst oder kontaminiert werden.

Ausserdem kann in bestimmten Fällen durch die Zusammensetzung des verwendeten Fluids, zum Beispiel durch die Menge an Sauerstoff oder anderer chemischer Elemente, die es enthält, auch die chemische Zusammensetzung der zu spritzenden Beschichtung mit beeinflusst werden.

Darüber hinaus ist der hohle Maskierungskörper der vorliegenden Erfindung derart ausgestaltet, dass er im Betriebszustand kurbeiraumseitig mit dem Anschlusssegment an der Zylinderbohrung eines zu behandelnden ersten Zylinders platzierbar ist. Das heisst, der hohle Maskierungskörper wird erfindungsgemäss nicht im Inneren der Zylinderbohrung platziert, sondern kurbelraumseitig vor der Zylinderbohrung, wobei höchstens ein kleiner Randbereich oder Ringbereich, wie weiter unten noch erläutert werden wird, kurbelraumseitig einen schmalen ringförmigen Bereich von z.B. einem 1 mm Breite vom Maskierungskörper überdeckt sein kann, da in diesem Bereich aus technischen Gründen keine Beschichtung gewünscht ist. Es versteht sich, dass der schmale überdeckte Ringbereich natürlich auch schmaler oder breiter als 1 mm sein kann.

Dabei sorgt das Abschirmsegment, das sich im Einbauzustand von der Zylinderbohrung weg in den Kurbelraum hinein erstreckt, dafür, dass die oben schon mehrmals erwähnten schädlichen Partikel, wie zum Beispiel Metallstäube vom thermischen Spritzen oder Strahlpartikel von der Aktivierung der Zylinderlaufflächen, sicher aus dem Kurbelgehäuse heraus geführt werden, ohne dass Zylinderlaufflächen benachbarter Zylinder oder innere Oberflächen des Kurbelgehäuses negativ beeinflusst werden, weil diese die vorgenannten Flächen bei Einsatz des erfindungsgemässen Maskierungssystems praktisch nicht mehr erreichen können.

Somit ist ein entscheidender Unterschied des erfindungsgemässen Maskierungssystems zu den bekannten Maskierungssystemen, dass der Maskierungskörper des erfindungsgemässen Maskierungssystems kurbelraumseitig vor der zu behandelnden Zylinderbohrung platziert wird und dadurch z.B. die benachbarten Zylinder vor schädlichen Einflüssen schützt, während die bekannten System jeweils an bzw. in den nicht zu behandelnden Zylinderbohrungen vorgesehen sind.

Die aus dem Stand der Technik bekannten Lösungen haben also neben den oben bereits ausführlich diskutierten Nachteilen zusätzlich noch den Nachteil, dass im Prinzip jede nicht zu behandelnde Fläche geschützt werden muss. Also z.B. jede einzelne Zylinderbohrung oder Zylinderlauffläche, die nicht behandelt werden soll, also z.B. aktuell nicht thermisch beschichtet werden soll, muss durch eine eigene Maskierung geschützt werden, während beim Einsatz eines erfindungsgemässen hohlen Maskierungskörpers nur der aktuell zu bearbeitende, z.B. zu beschichtende Zylinder maskiert werden muss. Andere Flächen, wie z.B. innere Oberfläche des Kurbelraums lassen sich mit den aus dem Stand der Technik bekannten Systemen darüber hinaus häufig überhaupt nicht abschirmen. Die bekannten Maskierungssysteme sind somit per se apparativ viel aufwendiger, teuerer in der Anschaffung, und in der Verwendung komplizierter, was insbesondere häufig eine automatisierte Handhabung in der Massenproduktion sehr schwierig oder gar unmöglich macht.

Bevorzugt ist dabei ein maximaler äusserer Durchmesser des hohlen Maskierungskörpers etwas kleiner als der Durchmesser des Zylinders der zu behandelnden Zylinderlauffläche. So ist z.B. der Durchmesser eines erfindungsgemässen hohlen Maskierungskörpers ca. 1 mm kleiner als der Durchmesser der noch unbeschichteten Zylinderbohrung. Dadurch ist es möglich den erfindungsgemässen Maskierungskörpers von oben, das heisst durch die dem Kurbelraum abgewandte Öffnung der Zylinderbohrung durch die Zylinderbohrung hindurch einzuführen, und kurbelwellenseitig vor der dem Kurbelraum zugewandten Öffnung der Zylinderbohrung zu platzieren.

Dadurch wird eine Automatisierung der Positionierung des Maskierungssystems extrem vereinfacht, weil das umständliche Einführen des Maskierungskörpers durch das geometrisch komplizierte Kurbelwellengehäuse entfällt. Vielfach ist es sogar so, dass ein Maskierungskörper aufgrund geometrischer Hindernisse und aufgrund enger Platzverhältnisse, vor allem bei kleineren Motorentypen, durch das Kurbelwellengehäuse überhaupt nicht an den zu beschichtenden Zylinder herangeführt werden kann. Vor allem hier erweist sich das erfindungsgemässe Maskierungssystem als ausserordentlich überlegen.

Da, wie oben erwähnt, der Durchmesser des Maskierungskörpers geeignet kleiner gewählt wird als der Durchmesser der zu beschichtenden Zylinderbohrung, kann der Maskierungskörper auch nach dem Beschichten der Zylinderlauffläche des Zylinders wieder durch die beschichtete Zylinderbohrung hindurch bequem entfernt werden. Ist wie in dem obigen Beispiel der Durchmesser des Maskierungssystems ca. 1 mm kleiner als der Durchmesser der unbeschichteten Zylinderbohrung, so kann bei einer typischen Beschichtungsdicke der Zylinderlauffläche von z.B. 250 µm der Maskierungskörper auch nach dem Beschichten wieder bequem durch den beschichteten Zylinder hindurch entfernt werden.

Es versteht sich, dass je nach Anwendung der Unterschied im Durchmesser zwischen Zylinderbohrung und Maskierungskörper auch grösser oder kleiner als 1 mm sein kann und dass das erfindungsgemässe Maskierungssystem auch dann erfolgreich eingesetzt werden kann, wenn die aufzubringende Beschichtung eine grössere oder kleinere Dicke als 250 µm aufweist.

In einem bevorzugten Ausführungsbeispiel ist der hohle Maskierungskörper zumindest Abschnittsweise, im Speziellen vollständig als ein Hohlzylinder mit veränderlichem oder konstanten Innendurchmesser ausgebildet.

Dabei kann der hohle Maskierungskörper ein Befestigungssegment umfassen, das in einer für die Praxis besonders wichtigen Ausführung zwischen dem Anschlusssegment und dem Abschirmsegment vorgesehen ist, wobei sich das Befestigungssegment trichterförmig, sich insbesondere trichterförmig verjüngend vom Anschlusssegment zum Abschirmsegment hin erstreckt. Dadurch wird einerseits erreicht, dass das abzuführende Kühl- und Spülfluid, sowie abzuführende Partikel oder Beschichtungsstäube in einer gut definierten Richtung und in einem mehr oder weniger kompakten Strahl aus dem Kurbelgehäuse herausführbar sind; andererseits ist eine solche Ausführung vor allem in einem engen Kurbelgehäuse besonders vorteilhaft einsetztbar, weil es weniger Raum einnimmt als ein Maskierungskörper mit einem sich nicht entsprechend verjüngenden Befestigungselement.

Es versteht sich, dass für besondere Anwendungen das Befestigungselement auch anders geformt sein kann, also sich z.B. trichterartig erweiternd vom Anschlusssegment zum Abschirmsegment hin erstrecken kann, einen konstanten Durchmesser haben kann oder in anderer Weise geeignet geformt sein kann.

Ausserdem ist klar, dass natürlich auch das Befestigungssegment und das Abschirmsegment eine sich verjüngende, eine sich erweiternde Form, eine Form mit konstantem Durchmesser oder jede andere geeignete Form haben kann.

Wie oben bereits ausführlich geschildert, ist der hohle Maskierungskörper der vorliegenden Erfindung derart ausgestaltet, dass er im Betriebszustand kurbelraumseitig mit dem Anschlusssegment an der Zylinderbohrung eines zu behandelnden ersten Zylinders platzierbar ist. Das heisst, der hohle Maskierungskörper wird erfindungsgemäss nicht im Inneren der Zylinderbohrung platziert, sondern kurbelraumseitig vor der Zylinderbohrung. Dabei kann ein kleiner Randbereich oder Ringbereich des Maskierungskörpers kurbelraumseitig in die Zylinderbohrung hineinreichen, so dass ein schmaler Ringbereich der Zylinderlauffläche in einer Breite von z.B. einem 1 mm - 5 mm vom Maskierungskörper überdeckt wird, da in diesem Bereich aus technisch Gründen keine Beschichtung gewünscht ist.

D.h., nach dem Beschichten einer bestimmten Zylinderlauffläche bleibt kurbelraumseitig der zuvor beschriebene schmale Bereich auf der Zylinderlauffläche unbeschichtet.

Insbesondere aus Gründen der Haftfestigkeit der thermischen Spritzschicht auf der Zylinderlauffläche sollte jedoch, wie ebenfalls bereits erläutert, vor dem Aufbringen der thermischen Spritzschicht die Zylinderlauffläche z.B. mittels einer der eingangs erwähnten Methoden aktiviert werden. Dabei sollte vorteilhafterweise auch der schmale Bereich, der nicht beschichtet werden soll, ebenfalls aktiviert werden, da dies die Stabilität und Haftfestigkeit der thermischen Spritzschicht kurbeiraumseitig im Randbereich erhöht und z.B. einem Ausbrechen der Schicht im Randbereich vorbeugt.

Daher müsste vor dem Aktivierungsvorgang ein erster Maskierungskörper verwendet werden, dessen Anschlusssegment eine Breite hat, die es gestattet, dass die Zylinderlauffläche auch in dem oben erwähnten schmalen kurbelraumseitigen Bereich aktiviert wird. Da dieser Bereich beim anschliessenden Beschichtungsvorgang jedoch nicht beschichtet werden soll, müsste der beim Aktivieren verwendete erste Maskierungskörper vor dem Beschichten entfernt werden und durch einen zweiten Maskierungskörper ersetzt werden, der ein etwas breiteres Anschlusssegment hat, als der erste Maskierungskörper, so dass durch den zweiten Maskierungskörper der kurbelraumseitige schmale Bereich der Zylinderbohrung beim Beschichten nicht mit beschichtet wird.

Es liegt auf der Hand, dass dies ein unerwünscht kompliziertes und aufwendiges Vorgehen ist.

Daher umfasst ein erfindungsgemässer Maskierungskörper in einem besonderen Ausführungsbeispiel einen mit dem Anschlusssegment lösbar verbundenen Abdeckring, der während des Aktivierungsvorgangs nicht mit dem Anschlusssegment verbunden ist, so dass der schmale kurbelraumseitige Bereich während des Aktivierens der Zylinderlauffläche nicht abgedeckt ist, und so der kurbeiraumseitige schmale Bereich der Zylinderlauffläche ebenfalls aktiviert wird.

Nach Abschluss des Aktivierungsvorgangs muss dann nur noch der Abdeckring durch die entsprechende Zylinderbohrung eingeführt werden und mit dem Anschlusssegment, z.B. in einer geeigneten Nut im Anschlusssegment, verbunden werden, so dass im anschliessenden Beschichtungsvorgang der kurbelraumseitige schmale Bereich der Zylinderlauffläche nicht beschichtet wird. Dabei kann die Verbindung zwischen Abdeckring und Anschlusssegment auch z.B. magnetisch erfolgen, wenn beispielsweise der Abdeckring und das Anschlusssegment aus einem magnetischen Material bestehen oder über eine Klebeverbindung oder kann durch jede andere dem Fachmann an sich bekannte Art der Verbindung erfolgen.

Zur Fixierung des Maskierungskörpers an einem Kurbelgehäuse des Kurbelraums kann desweiteren ein Verbindungselement vorgesehen sein, zum Beispiel in Form einer Halterung, die mit dem Maskierungskörper und / oder dem Kurbelgehäuse lösbar verbindbar ist.

Der Maskierungskörper kann dabei mit dem Verbindungselement mechanisch, z.B. mittels Schrauben oder Bolzen, insbesondere auch pneumatisch oder hydraulisch, und / oder magnetisch und / oder mittels einer Klebeverbindung verbunden sein. Die verschiedenen Möglichkeiten der lösbaren Verbindung zweier mechanischer Komponenten sind dem Fachmann an sich bekannt und brauchen nicht weiter im Detail diskutiert zu werden.

Das gleiche gilt für die Verbindung von Verbindungselement und Kurbelgehäuse. Das Verbindungselement kann mit dem Kurbelgehäuse mechanisch, insbesondere pneumatisch oder hydraulisch, und / oder magnetisch und / oder mittels einer Klebeverbindung, oder mittels jedes anderen geeigneten Verbindungsmittels verbunden sein.

Insbesondere kann in einem anderen Ausführungsbeispiel das Verbindungselement auch fehlen und der hohle Maskierungskörper kann auch direkt mit dem Kurbelgehäuse mechanisch, insbesondere pneumatisch oder hydraulisch, und / oder magnetisch und / oder mittels einer Klebeverbindung oder mittels jeden anderen geeigneten Verbindungsmittels verbunden sein.

Insbesondere kann kurbelraumseitig am unteren Ende der Zylinderbohrung in der Zylinderlauffläche eine umlaufende Nut vorgesehen sein, die entweder aus technischen Gründen ohnehin vorgesehen ist, oder zur Fixierung eines erfindungsgemässen Maskierungskörpers eigens eingebracht wird, so dass der Maskierungskörpers zum Beispiel mittels eines Spannrings, z.B. Sprengring, der am Maskierungskörper geeignet vorgesehen wird, in der umlaufenden Nut auf besonders einfache Weise, vor allem auch automatisch, z.B. mittels eines Robotersystems, an der Zylinderbohrung schnell und sicher fixiert und nach dem Bearbeiten ebenso einfach wieder automatisch entfernt werden kann.

Annstatt des Spannrings kann am Maskierungskörper auch ein hydraulisch oder pneumatisch bedienbares umlaufendes Ringelement vorgesehen sein, dass sich z.B. unter einer Druckbeaufschlagung in die umlaufende Nut in der der Zylinderlauffläche ausdehnt und so den Maskierungskörper an der Zylinderbohrung fixiert.

Der hohle Maskierungskörper und / oder das Verbindungselement kann dabei zum Beispiel aus Metall oder einer Metalllegierung, insbesondere aus Aluminium oder einer Aluminiumlegierung und / oder aus einem magnetischen Stahl und / oder aus einem Kunststoff, insbesondere aus einem Kunststoff Spritzguss, im Speziellen aus einem magnetische Elemente umfassenden Kunststoff Spritzguss und / oder aus einem Verbundwerkstoff, insbesondere aus einem magnetische Elemente umfassenden Verbundwerkstoff hergestellt sein. Für die industrielle Massenproduktion bieten sich vor allem Spritzguss Teile an, da sie in grossen Stückzahlen, sehr kostengünstig und in praktisch jeder beliebigen Form und Geometrie einfach hergestellt werden können.

In der Praxis kann das erfindungsgemässe Maskierungssystem mindestens zwei hohle Maskierungskörper umfassen, so dass mindestens zwei Zylinder, bevorzugt zwei benachbarte Zylinder gleichzeitig maskierbar sind, und / oder das Maskierungssystem kann eine vorgebbare Anzahl von hohlen Maskierungskörpern umfassen, so dass im Speziellen eine komplette Zylinderreihe einer Brennkraftmaschine in V-Bauweise, insbesondere zwei gegenüberliegenden komplette Zylinderreihen einer Brennkraftmaschine in V-Bauweise gleichzeitig maskierbar sind. Dadurch kann der Wechsel zwischen der Bearbeitung von zwei verschiedenen Zylinderbohrungen im automatisierten Betrieb viel schneller vollzogen werden.

Dabei versteht es sich, dass bei einem erfindungsgemässen Maskierungssystem ein Maskierungskörper auch mit anderen Schutzvorrichtungen, wie zum Beispiel mit einem Maskierungselement, in bestimmten Fällen vorteilhaft kombinierbar ist.

So kann zur Maskierung einer zweiten Zylinderbohrung während des thermischen Beschichtungsvorgangs und / oder eines anderen Behandlungsvorgangs, wie zum Beispiel beim Aktivieren der Zylinderlauffläche, zusätzlich ein Maskierungselement vorgesehen sein, das während der Behandlung der Oberfläche, also zum Beispiel während des thermischen Beschichtungsvorgangs des ersten Zylinders zur Abdeckung der Zylinderlauffläche des zweiten Zylinders in der Zylinderbohrung des zweiten Zylinders platzierbar ist. Das Maskierungselement ist dabei vorteilhaft derart ausgestaltet, dass zur Erzeugung einer Strömung eines Fluids zwischen dem Maskierungselement und der Zylinderlauffläche des zweiten Zylinders ein Strömungsspalt von vorgebbarer Breite einstellbar ist.

Wesentlich ist dabei, dass das erfindungsgemässe Maskierungssystem zusätzlich ein Maskierungselement umfasst, das einerseits eine nicht zu beschichtende Zylinderwand einer Zylinderbohrung während des Beschichtens einer anderen Zylinderwand im wesentlichen vollständig abdeckt und diese damit vor dem direkten Aufbringen von Metalldämpfen, die aus einem Beschichtungsstrahl stammen, mit dem der andere Zylinder beschichtet wird, schützt. Also verhindert, dass die nicht zu beschichtende Zylinderwand mittelbar oder unmittelbar dem Beschichtungsstrahl ausgesetzt wird. Das wird zwar in vielen für die Praxis relevanten Fällen bereits durch den Maskierungskörper allein gewährleistet. In ganz speziellen Fällen, in denen zum Beispiel extrem hohe Anforderungen an den Schutz der aktuell nicht zu beschichtenden Zylinderbohrungen gestellt sind, oder besonderes hohe Schutzmassnahmen gegen thermische Belastungen dieser nicht zu beschichtenden Zylinderbohrungen gefordert sind, kann der zusätzliche Einsatz eines Maskierungselements noch notwendig sein.

Dabei ist das Maskierungselement derart ausgestaltet, dass zwischen dem Maskierungselement und der aktuell nicht zu beschichtenden Zylinderwand ein Strömungsspalt frei bleibt, so dass darin eine Luftströmung erzeugbar ist, die einerseits eine Kühlung des Motorblocks in der abgedeckten Zylinderbohrung bewirkt und anderseits verhindert, dass indirekt Metallstäube, die sich im Inneren des Motorblocks, wenn auch bei Einsatz des Maskierungskörpers nur in geringer Konzentration, verteilen, sich auf der aktuell nicht zu beschichtenden Zylinderwand niederschlagen.

Betrachtet man ein spezielles Ausführungsbeispiel der Erfindung, so wird z.B. auf einem gegenüberliegenden Zylinder während der Beschichtung ein geschlossenes Rohr mit einem kontrollierten Strömungsspalt zwischen Rohr und Zylinderlauffläche eingeführt. Durch entsprechende Öffnungen und einer angemessenen Absaugung wird eine Strömung von Luft bzw. anderer Fluide erreicht, die die Zylinderlauffläche kühlt und gleichzeitig die Abscheidung von Metalldämpfen auf dieser Zylinderlauffläche verhindert, da die Strömungen bzw. Turbulenzen der Metalldämpfe wirksam zurückgedrängt werden können. Zum Beispiel bei der Beschichtung von Zylinderkurbelgehäusen in V-Bauweise wird jeweils bevorzugt eine Zylinderreihe beschichtet. Die ihr gegenüberliegende Zylinderreihe kann dabei durch ein Maskierungselement derart geschützt werden, dass z.B. ein Plasmastrahl einer rotierenden Plasmaspritzvorrichtung, die in axialer Richtung beim Beschichten durch die Zylinderbohrung geführt wird, die Zylinderwände der nicht zu beschichtenden Zylinderreihe nicht erreicht.

Ausserdem wird, wie bereits erwähnt, eine während des Beschichtungsvorgangs zwangsläufig stattfindende Erwärmung des Zylinderblocks durch den Wärmeübergang von geschmolzenem Pulver zum Substrat noch weiter reduziert. Eine Überhitzung ist insbesondere bei dünnwandigen Bauteilen unbedingt zu vermeiden, weil dies zur Überhitzung des Zylinderblocks führen kann, was ebenfalls schädliche Schichtablösungen zur Folge haben kann. Auch diese schädlichen Wirkungen werden durch den Einsatz dieses Ausführungsbeispiels eines erfindungsgemässen Maskierungssystems vermieden, weil durch die Regulierung der Strömung des Fluids durch den Strömungsspalt das Maskierungssystem der vorliegenden Erfindung ein intelligentes Temperaturmanagement während des Beschichtungsprozesses gewährleistet.

In einem speziellen Ausführungsbeispiel ist das Maskierungselement ein hohles Maskierungselement oder ein massives Maskierungselement, bevorzugt ein hohler Maskierungszylinder oder ein massiver Maskierungszylinder.

Dabei ist das Maskierungselement bevorzugt so ausgestaltet, dass der Strömungsspalt eine Breite von 0.1 mm bis 10 mm, bevorzugt eine Breite zwischen 0.2 mm und 5 mm, im speziellen eine Breite zwischen 0.4 mm und 3 mm hat. Dadurch ist gleichzeitig gewährleistet, dass der Strömungsspalt schmal genug ist, so dass eine direkte Kontamination der Zylinderwand des durch das Maskierungselement geschützten Zylinders verhinderbar ist und gleichzeitig eine ausreichend starke Strömung im Strömungsspalt aufrecht erhalten werden kann, so dass eine ausreichende Kühlung erreichbar ist.

In einem speziellen Ausführungsbeispiel umfasst ein erfindungsgemässes Maskierungssystem mindestens zwei Maskierungselemente, so dass mindestens zwei Zylinder, bevorzugt zwei benachbarte Zylinder gleichzeitig maskierbar sind, wobei in einem für die Praxis besonders wichtigen Ausführungsbeispiel das Maskierungssystem eine vorgebbare Anzahl von Maskierungselementen umfasst und derart ausgestaltet ist, dass eine komplette Zylinderreihe einer Brennkraftmaschine in V-Bauweise gleichzeitig maskierbar ist.

Bevorzugt umfasst das Maskierungselement eine Maskierungsabdeckung und die Maskierungsabdeckung umfasst insbesondere einen mit dem Strömungsspalt verbundenen Kanal, insbesondere einen Auslasskanal und / oder einen Einlasskanal zur Förderung des Fluids. Der Kanal kann dabei Öffnungen haben, von denen eine oder mehrere in der Maskierungsabdeckung vorgesehen sein können, über die das Fluid, z.B. Luft oder ein anderes Gas, beispielsweise durch eine Absaugvorrichtung, die am Kurbelgehäuse vorgesehen sein kann, absaugbar ist, so dass dadurch die Strömung im Strömungsspalt zwischen Maskierungskörper und Zylinderwand herstellbar ist.

Es versteht sich, dass in einem anderen Ausführungsbeispiel auch Luft oder ein anderes Gas über die Öffnungen, von denen zum Beispiel mehrere in der Maskierungsabdeckung vorgesehen sein können und z.B. kreisförmig in der Nähe eines Rands der Maskierungsabdeckung angeordnet sein können, unter einem vorgebbaren Druck in den Strömungsspalt einbringbar ist oder über die Öffnungen absaugbar ist, wobei die Strömungsrichtung des Fluids, je nach dem ob das Fluid unter Druck in die Öffnungen eingeblasen oder aus diesen abgesaugt wird, entweder in das Kurbelgehäuse hinein oder aus diesem heraus gerichtet ist. Der Fachmann versteht, dass je nach Anforderung die Form der Öffnungen verschieden sein kann, z.B. kreisförmige Öffnungen, schlitzförmige Öffnungen oder Öffnungen von anderer geeigneter Form vorgesehen sein können.

Wie erwähnt, kann das Maskierungssystem ein Absaugmittel umfassen, so dass die Strömung des Fluids durch den hohlen Maskierungskörper und / oder durch das hohle Maskierungselement und / oder durch den Strömungsspalt durch den Kurbelraum absaugbar ist.

Alternativ oder zusätzlich kann auch ein Einspeisemittel zur Einspeisung des Fluids in den hohlen Maskierungskörper und / oder in das Maskierungselement und / oder in den Strömungsspalt vorgesehen sein, so dass die Strömung des Fluids durch den hohlen Maskierungskörper und / oder durch das Maskierungselement und / oder durch den Strömungsspalt unter einem vorgebbaren Einspeisedruck erzeugbar ist.

Als Fluid ist insbesondere ein Gas oder ein Gasgemisch, im speziellen Luft und / oder Stickstoff und / oder ein Edelgas, insbesondere Argon und / oder Helium zur Erzeugung der Strömung im Strömungsspalt und / oder im Maskierungskörper besonders gut geeignet.

Eine Strömungsgeschwindigkeit des Fluids im Strömungsspalt ist bevorzugt grösser als 1 m/s, insbesondere grösser als 10 m/s, und liegt im Speziellen zwischen 1 m/s und 150 m/s, bevorzugt zwischen 10 m/s und 80 m/s. Dadurch wird einerseits eine ausreichende Kühlung des Motorblocks erreicht und andererseits eine genügend Starke Strömung im Strömungsspalt erzeugt, so dass sich kein Metalldampf auf einer nicht zu beschichtenden Zylinderlauffläche, die durch ein erfindungsgemässes Maskierungssystem geschützt ist, absetzten kann.

Insbesondere um den Beschichtungsvorgang von Zylinderlaufflächen von Motorblöcken für die industrielle Massenproduktion vorteilhaft zu automatisieren, kann zur Positionierung des Maskierungskörpers ein Manipulator, insbesondere ein programmgesteuertes Robotersystem vorgesehen sein, so dass der Maskierungskörper und / oder das Maskierungselement automatisch nach einem vorgebbaren Programmablaufschema in und / oder an der Zylinderbohrung platzierbar ist und / oder eine Versorgungseinheit zur Bereitstellung des Fluids vorgesehen ist, die bevorzugt programmgesteuert steuer- und / oder regelbar ist. Vorteilhaft ist die Versorgungseinheit zur Bereitstellung des Fluids programmgesteuert steuer- und / oder regelbar, so dass z.B. die Durchflussmenge und / oder der Druck und / oder die Durchflussgeschwindigkeit des Fluidstromes im Strömungsspalt und / oder im Maskierungskörper steuer- und / oder regelbar ist und z.B. in Abhängigkeit von der Zeit, der Art des zu beschichtenden Motorblocks oder in Abhängigkeit von bestimmten Beschichtungsparametern, wie Temperatur, Art der verwendeten Beschichtungsvorrichtung, Art des Beschichtungsmaterials, Art des Beschichtungsverfahrens usw. steuer- und / oder regelbar ist.

Die Erfindung betrifft weiter die Verwendung eines erfindungsgemässen Maskierungssystems wobei der thermische Beschichtungsvorgang ein Plasmaspritzverfahren, insbesondere mit einem rotierenden Plasmaspritzgerät, bevorzugt ein Plasma APS Verfahren, ein Flammspritzverfahren, insbesondere ein Hochgeschwindigkeits Flammspritzverfahren und / oder ein anderes thermisches Spritzverfahren, wie zum Beispiel ein Lichtbogen Drahtspritzverfahren umfasst.

Dabei wird ein erfindungsgemässes Maskierungssystem insbesondere als Schutz gegen Kontamination einer Zylinderbohrung und / oder zur Kühlung während des thermischen Beschichtungsvorgangs verwendet.

Im Folgenden wird die Erfindung an Hand der Zeichnung näher erläutert. Es zeigen in schematischer Darstellung:
- Fig. 1: einen Schnitt durch einen Zylinderblock eines Motors in V- Bauweise mit einem erfindungsgemässen Maskierungssystem;
- Fig. 2: einen Maskierungskörper im Detail;
- Fig. 3: ein Maskierungssystem mit Maskierungselement und Absaugvorrichtung.

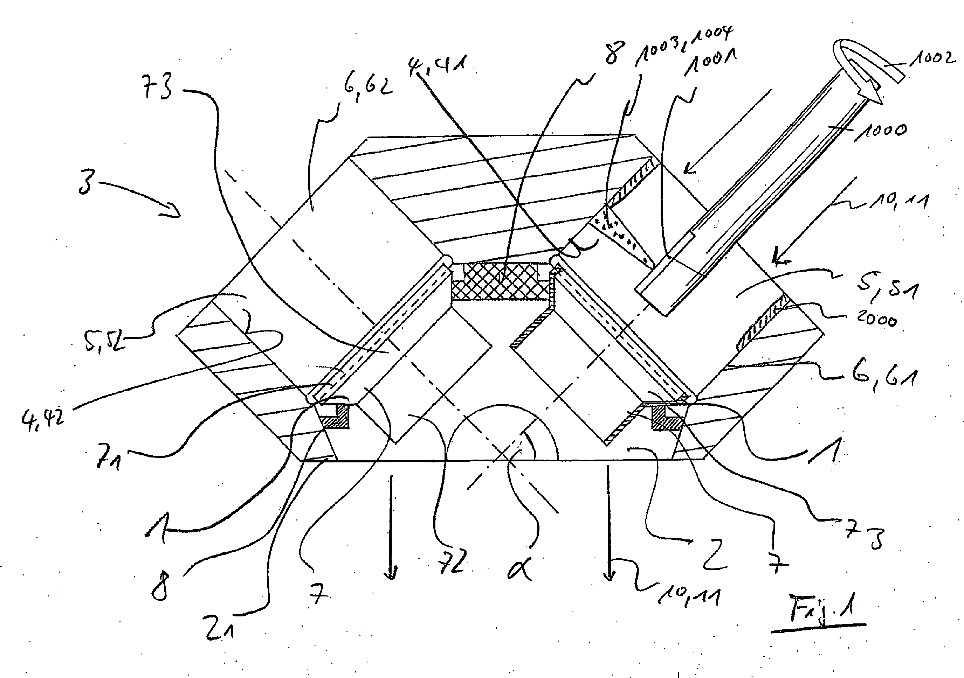

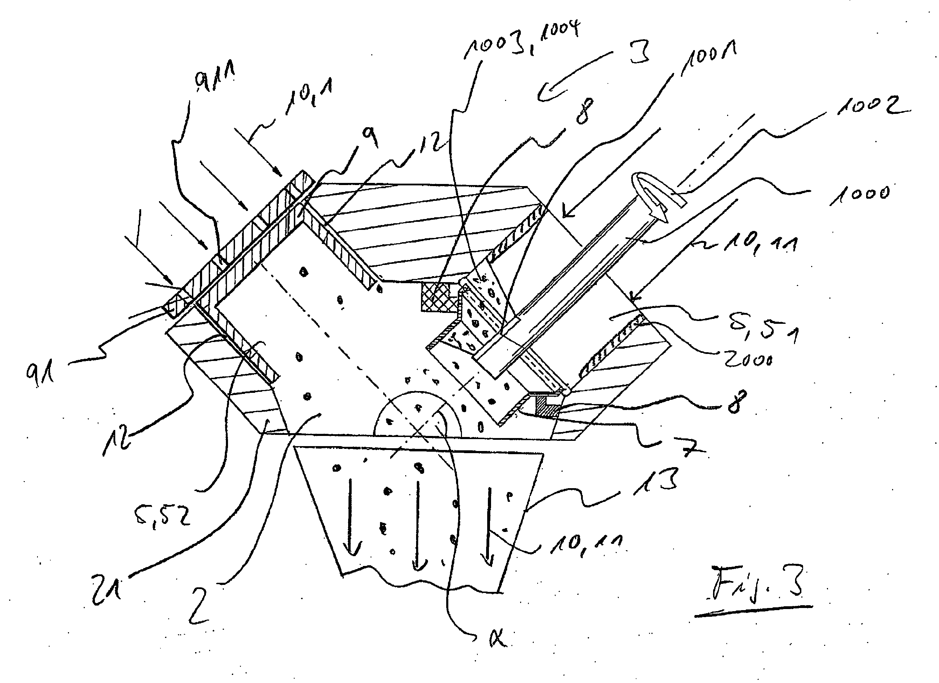

Die Fig. 1 und Fig. 3 zeigen in einer Darstellung im Schnitt zwei einfache Ausführungsvariante eines erfindungsgemässen Maskierungssystems während des Beschichtens einer Zylinderbohrung eines Motors in V-Bauweise, an welcher die Funktionsweise eines erfindungsgemässen Maskierungssystems, das im folgenden gesamthaft mit dem Bezugszeichen 1 bezeichnet ist, schematisch erläutert wird.

Dabei umfasst das Maskierungssystem der Fig. 3 zusätzlich zum Schutz und zur besseren Kühlung einer nicht zu beschichtenden Zylinderlauffläche 4, 42 ein Maskierungselement 9.

In den Fig. 1 und Fig. 3 sind ein Schnitt durch einen Motorblock eines Motors in V-Bauweise dargestellt, dessen zwei Zylinderreihen in an sich bekannter Weise parallel zueinander, unter einem Neigungswinkel α angeordnet sind.

Ein erster Zylinder 6, 61, der darstellungsgemäss rechte Zylinder, wird gerade mit einer an sich bekannten rotierenden Plasmaspritzpistole 1000 beschichtet. Die Plasmaspritzpistole 1000 rotiert während des Beschichtungsvorgangs im Zylinder 6, 61 um eine Längsachse, wie der Pfeil 1002 andeutet und wird unter Rotation in axialer Richtung durch die Zylinderbohrung 5, 51 während des Beschichtungsvorgangs geführt. An einem unteren Ende der Plasmaspritzpistole 1000 tritt aus einer Spritzöffnung 1001 ein Plasmastrahl 1003 mit Beschichtungsmaterial 1004 aus, mit welchem Beschichtungsmaterial 1004 die Zylinderlauffläche 4, 41 des Zylinders 6, 61 beschichtet wird.

Bei dem Beispiel der Fig. 1 ist gerade erst die obere Hälfte des Zylinders mit einer thermischen Beschichtung 2000 versehen. Die Plasmaspritzpistole ist von ihrem unteren Umkehrpunkt noch so weit entfernt, dass der Plasmastrahl 1003 in voller Breite die Zylinderlauffläche 4, 41 trifft.

Im Beispiel der Fig. 3. befindet sich die Plasmaspritzpistole 1000 bereits in der Nähe ihres unteren Umkehrpunktes, dass heisst der Plasmastrahl 1003 mit Beschichtungsmaterial 1004 trifft nicht nur auf die zu beschichtende Zylinderlauffläche 4, 41 des Zylinders 6, 61, sondern reicht in das Kurbelgehäuse des V-Motors 3 bereits ein Stück hinein. Ohne den erfindungsgemässen Maskierungskörper 7 würden die übrigen nicht zu beschichtenden Zylinderlaufflächen 4, 42, sowie die Innenflächen des Kurbelraums 2 durch Partikel 1004 aus dem Beschichtungsstrahl 1003 kontaminiert und darüber hinaus durch den Plasmastrahl 1003 über Gebühr erwärmt.

Der Maskierungskörper 7, der das Anschlusssegment 71, das Abschirmsegment 72 und das Befestigungssegment 73 umfasst, ist in Fig. 1 und Fig. 3 mittels mehrerer Verbindungselemente 8 mit dem Kurbelgehäuse 21 durch nicht näher dargestellte Verschraubungen verbunden.

Da es sich bei dem Motor 3 der Fig. 3 um einen hochempfindlichen Hochleistungsmotor 3 handelt, ist hier vor allem zur Erzielung einer besseren Kühlung zusätzlich in der Zylinderbohrung 5, 52 des zweiten Zylinders 6, 62 ein Maskierungselement 9 vorgesehen, das im vorliegenden Beispiel der Fig. 3 als Hohlzylinder 9 ausgestaltet ist und zusätzlich eine Maskierungsabdeckung 91 umfasst. Die Maskierungsabdeckung 91, die einen Deckel auf dem zweiten Zylinder 6, 62 bzw. auf dem Markierungselement 9 bildet, umfasst einen mit dem Strömungsspalt 12, der zwischen dem Maskierungszylinder 9 und der Zylinderlauffläche 4, 42 ausgebildet ist, verbundenen Kanal 911 mit Öffnungen, der im Beispiel der Fig. 3 als Einlasskanal 911 zur Förderung des Fluids 11 in den Strömungsspalt 12 ausgebildet ist.

Die Strömung 10 des Fluids 11 im Strömungsspalt 12 wird dabei durch ein in Fig. 3 nur schematisch dargestelltes Absaugmittel 13 erzeugt, das in einer dem Fachmann an sich bekannten Weise im Kurbelgehäuse einen vorgebbaren Unterdruck erzeugt, so dass durch die Öffnungen der Kanäle 911 in der Maskierungsabdeckung 91 z.B. Luft 11 angesaugt wird, die dann durch den mit den Öffnungen der Kanäle 911 verbundenen Strömungsspalt 12 strömt, so dass der Zylinder 6, 62 und damit auch der komplette Motorblock der Brennkraftmaschine 3 zusätzlich gekühlt wird und andererseits eine Abscheidung von Metalldämpfen auf der Zylinderlauffläche 4, 42 des zweiten Zylinders 6, 62 noch optimaler verhinderbar ist.

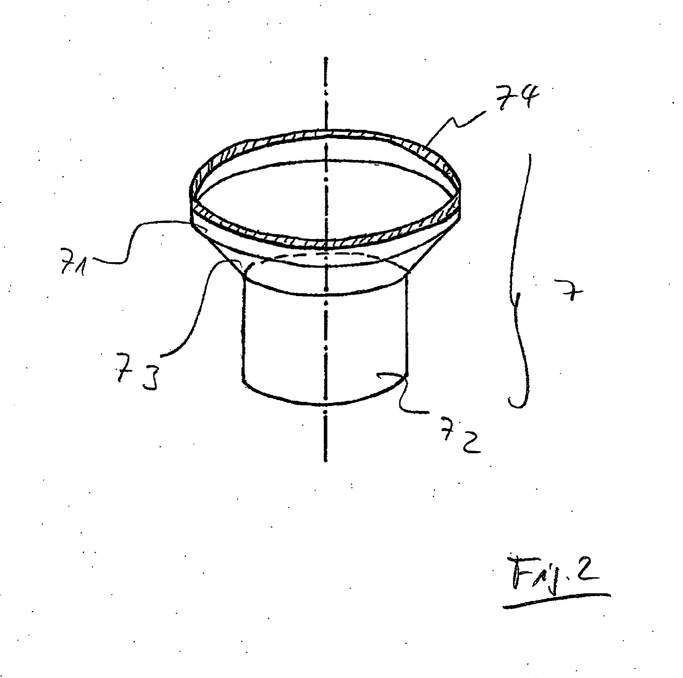

In Fig. 2 ist zur Verdeutlichung nochmals ein erfindungsgemässer Maskierungskörper 7 im Detail dargestellt.

Der hohle Maskierungskörper 7 umfasst ein Anschlusssegment 71 zum Anschluss des hohlen Maskierungskörpers 7 an die Zylinderbohrung 5, 51, 52, sowie ein Abschirmsegment 72. Zwischen Anschlusssegment 71 und Abschirmsegment 72 ist zusätzlich ein sich trichterförmig vom Anschlusssegment 71 zum Abschirmsegment 72 hin verjüngendes Befestigungssegment 73 vorgesehen. Dadurch, dass sich der Durchmesser des Befestigungssegments 73 in Richtung zum Abschirmsegment 72 verkleinert, kann das Abschirmsegment72 einen kleineren Durchmesser haben las das Anschlusssegment 71, wodurch die abzuführenden Beschichtungspartikel stärker gerichtet aus dem Kurbelraum 2 abgeführt werden können und gleichzeitig, was oft noch wichtiger ist, den engen Platzverhältnissen im Kurbelraum 2 besser Rechnung getragen wird.

Das spezielle Ausführungsbeispiel der Figur 2 hat dabei noch einen mit dem Anschlusssegment 71 lösbar verbunden Abdeckring 74, so dass, wie oben beschrieben, zwischen einer Aktivierungsbehandlung der Zylinderlauffläche 4, 41 und einem anschliessenden Beschichtungsvorgang nicht der gesamte Maskierungskörper 7 ausgetauscht werden muss.

Es versteht sich, dass die Erfindung nicht auf die beschriebenen Ausführungsbeispiele beschränkt ist und insbesondere auch alle geeigneten Kombinationen der dargestellten Ausführungsbeispiele von der Erfindung erfasst sind.

## Patentansprüche

1. Brennkraftmaschine mit einem Maskierungssystem (1) zur Maskierung eines Kurbelraums (2) der Brennkraftmaschine (3) während einer Oberflächenbehandlung einer Zylinderlauffläche (4, 41, 42) einer Zylinderbohrung (5, 51, 52) eines Zylinders (6, 61, 62) der Brennkraftmaschine (3) mittels einer Behandlungsvorrichtung, umfassend einen hohlen Maskierungskörper (7) mit einem Abschirmsegment (72) und einem Anschlusssegment (71) zum Anschluss des hohlen Maskierungskörpers (7) an die Zylinderbohrung (5, 51, 52), wobei der hohle Maskierungskörper (7) derart ausgestaltet ist, dass die Behandlungsvorrichtung durch den hohlen Maskierungskörper (7) hindurchführbar ist, und der hohle Maskierungskörper (7) während der Oberflächenbehandlung eines ersten Zylinders (6, 61) der Brennkraftmaschine (3) kurbelraumseitig mit dem Anschlusssegment (71) an der Zylinderbohrung (5, 51) des ersten Zylinders (6, 61) platzierbar ist, wobei ein maximaler äusserer Durchmesser des hohlen Maskierungskörpers (7) kleiner ist als ein Durchmesser des Zylinders (6, 61, 62), so dass der hohle Maskierungskörper (7) durch die Zylinderbohrung (5, 51, 52) hindurch in den Kurbelraum (2) einführbar ist, wobei zur Fixierung des Maskierungskörpers (7) an einem Kurbelgehäuse (21) des Kurbelraums (2) ein Verbindungselement (8) vorgesehen ist.

2. Brennkraftmaschine nach Anspruch 1, wobei der hohle Maskierungskörper (7) ein Hohlzylinder (7) ist.

3. Brennkraftmaschine nach einem der Ansprüche 1 oder 2, wobei der hohle Maskierungskörper (7) ein Befestigungssegment (73) umfasst.

4. Brennkraftmaschine nach einem der vorangehenden Ansprüche, wobei das Befestigungssegment (73) zwischen dem Anschlusssegment (71) und dem Abschirmsegment (72) vorgesehen ist.

5. Brennkraftmaschine nach einem der vorangehenden Ansprüche, wobei sich das Befestigungssegment (73) trichterförmig, insbesondere sich trichterförmig verjüngend vom Anschlusssegment (71) zum Abschirmsegment (72) hin erstreckt.

6. Brennkraftmaschine nach einem der vorangehenden Ansprüche, wobei das Anschlusssegment (71) einen lösbar verbundenen Abdeckring (74) umfasst.

7. Maskierungssystem zur Maskierung eines Kurbelraums (2) einer Brennkraftmaschine (3) nach einem der vorangehenden Ansprüche, wobei während einer Oberflächenbehandlung einer Zylinderlauffläche (4, 41, 42) einer Zylinderbohrung (5, 51, 52) eines Zylinders (6, 61, 62) der Brennkraftmaschine (3) mittels einer Behandlungsvorrichtung, der Kurbelraum (2) mit dem Maskierungssystem maskierbar ist, und das Maskierungssystem einen hohlen Maskierungskörper (7) mit einem Abschirmsegment (72) und einem Anschlusssegment (71) zum Anschluss des hohlen Maskierungskörpers (7) an die Zylinderbohrung (5, 51, 52) umfasst, wobei der hohle Maskierungskörper (7) derart ausgestaltet ist, dass die Behandlungsvorrichtung durch den Maskierungskörper hindurchführbar ist und der hohle Maskierungskörper (7) während der Oberflächenbehandlung eines ersten Zylinders (6, 61) der Brennkraftmaschine (3) kurbelraumseitig mit dem Anschlusssegment (71) an der Zylinderbohrung (5, 51) des ersten Zylinders (6, 61) platzierbar ist, wobei ein maximaler äusserer Durchmesser des hohlen Maskierungskörpers (7) kleiner ist als ein Durchmesser des Zylinders (6, 61, 62), so dass der hohle Maskierungskörper (7) durch die Zylinderbohrung (5, 51, 52) hindurch in den Kurbelraum einführbar ist, und zur Fixierung des Maskierungskörpers (7) an einem Kurbelgehäuse (21) des Kurbelraums (2) ein Verbindungselement (8) vorgesehen ist.

8. Verfahren zur Maskierung eines Kurbelraums (2) einer Brennkraftmaschine (3) mittels eines Maskierungssystems (1) während einer Oberflächenbehandlung einer Zylinderlauffläche (4, 41, 42) einer Zylinderbohrung (5, 51, 52) eines Zylinders (6, 61, 62) der Brennkraftmaschine (3) mittels einer Behandlungsvorrichtung, welches Maskierungssystem (1) einen hohlen Maskierungskörper (7) mit einem Abschirmsegment (72) und einem Anschlusssegment (71) umfasst, und der hohle Maskierungskörper (7) während der Oberflächenbehandlung eines ersten Zylinders (6, 61) der Brennkraftmaschine (3) kurbelraumseitig mit dem Anschlusssegment (71) an der Zylinderbohrung (5, 51) des ersten Zylinders (6, 61) platziert wird und die Behandlungsvorrichtung bei der Oberflächenbehandlung durch den Maskierungskörper zumindest zeitweise hindurchgeführt wird, wobei ein maximaler äusserer Durchmesser des hohlen Maskierungskörpers (7) kleiner als ein Durchmesser des Zylinders (6, 61, 62) gewählt wird, und der hohle Maskierungskörper (7) durch die Zylinderbohrung (5, 51, 52) hindurch in den Kurbelraum eingeführt wird, wobei zur Fixierung des Maskierungskörpers (7) an einem Kurbelgehäuse (21) des Kurbelraums (2) ein Verbindungselement (8) vorgesehen wird.

9. Verwendung eines Maskierungssystems nach Anspruch 7 oder eines Verfahrens nach Anspruch 8, wobei der thermische Beschichtungsvorgang ein Plasmaspritzverfahren ist.

10. Verwendung eines Maskierungssystems nach Anspruch 7 oder eines Verfahrens nach Anspruch 8, wobei der thermische Beschichtungsvorgang ein Flammspritzverfahren ist.

11. Verwendung eines Maskierungssystems nach Anspruch 7 oder eines Verfahrens nach Anspruch 8, wobei der thermische Beschichtungsvorgang ein Lichtbogen Drahtspritzverfahen ist.

## Claims

1. An internal combustion engine having a masking system (1) for the masking of a crank chamber (2) of the internal combustion engine (3) during a surface treatment of a cylinder running surface (4, 41, 42) of a cylinder bore (5, 51, 52) of a cylinder (6, 61, 62) of the internal combustion engine (3) by means of a treatment apparatus, including a hollow masking body (7) with a screen segment (72) and a connector segment (71) for the connection of the hollow masking body (7) to the cylinder bore (5, 51, 52), wherein the hollow masking body (7) is configured such that the treatment apparatus can be led through the hollow masking body (7) and the hollow masking body (7) can be positioned with the connector segment (71) at the cylinder bore (5, 51) of the first cylinder (6, 61) at the crank chamber side during the surface treatment of a first cylinder (6, 61) of the internal combustion engine (3), wherein a maximum outer diameter of the hollow masking body (7) is smaller than a diameter of the cylinder (6, 61, 62) so that the hollow masking body (7) can be introduced through the cylinder bore (5, 51, 52) into the crank chamber (2), with a connection element (8) being provided for fixing the masking body (7) to a crankcase (21) of the crank chamber (2).

2. An internal combustion engine in accordance with claim 1, wherein the hollow masking body (7) is a hollow cylinder (7).

3. An internal combustion engine in accordance with one of claims 1 or 2, wherein the hollow masking body (7) includes a fastening element (73).

4. An internal combustion engine in accordance with any one of the preceding claims, wherein the fastening segment (73) is provided between the connector segment (71) and the screen segment (72).

5. An internal combustion engine in accordance with any one of the preceding claims, wherein the fastening segment (73) extends in the manner of a funnel, in particular tapering in the manner of a funnel, from the connector segment (71) to the screen segment (72).

6. An internal combustion engine in accordance with any one of the preceding claims, wherein the connector segment (71) includes a releasably connected cover ring (74).

7. A masking system for the masking of a crank chamber (2) of an internal combustion engine (3) in accordance with any one of the preceding claims, wherein the crank chamber (2) can be masked using the masking system and the masking system includes a hollow masking body (7) with a screen segment (72) and a connector segment (71) for the connection of the hollow masking body (7) to the cylinder bore (5, 51, 52) during a surface treatment of a cylinder running surface (4, 41, 42) of a cylinder bore (5, 51, 52) of a cylinder (6, 61, 62) of the internal combustion engine (3) by means of a treatment apparatus, wherein the hollow masking body (7) is configured such that the treatment apparatus can be led through the masking body and the hollow masking body (7) can be positioned with the connector segment (71) at the cylinder bore (5, 51) of the first cylinder (6, 61) at the crank chamber side during the surface treatment of a first cylinder (6, 61) of the internal combustion engine (3), wherein a maximum outer diameter of the hollow masking body (7) is smaller than a diameter of the cylinder (6, 61, 62) so that the hollow masking body (7) can be introduced through the cylinder bore (5, 51, 52) into the crank chamber and a connection element (8) is provided for fixing the masking body (7) to a crankcase (21) of the crank chamber (2).

8. A method of masking a crank chamber (2) of an internal combustion engine (3) by means of a masking system (1) during a surface treatment of a cylinder running surface (4, 41, 42) of a cylinder bore (5, 51, 52) of a cylinder (6, 61, 62) of the internal combustion engine (3) by means of a treatment apparatus, which masking system (1) includes a hollow masking body (7) with a screen segment (72) and a connector segment (71) and the hollow masking body (7) is positioned with the connector segment (71) at the cylinder bore (5, 51) of the first cylinder (6, 6 1) at the crank chamber side during the surface treatment of a first cylinder (6, 61) of the internal combustion engine (3) and the treatment apparatus is led at least at times through the masking body in the surface treatment, wherein a maximum outer diameter of the hollow masking body (7) is selected to be smaller than a diameter of the cylinder (6, 61, 62) and the hollow masking body (7) is introduced through the cylinder bore (5, 51, 52) into the crank chamber, with a connection element (8) being provided for fixing the masking body (7) to a crankcase (21) of the crank chamber (2).

9. Use of a masking system in accordance with claim 7 or of a method in accordance with claim 8, wherein the thermal coating process is a plasma spray process.

10. Use of a masking system in accordance with claim 7 or of a method in accordance with claim 8, wherein the thermal coating process is a flame spraying process.

11. Use of a masking system in accordance with claim 7 or of a method in accordance with claim 8, wherein the thermal coating process is an arc wire spray process.

## Revendications

1. Moteur à combustion interne avec un système de masquage (1) destiné à masquer une chambre de vilebrequin (2) du moteur à combustion interne (3) pendant un traitement de surface d'une surface de roulement (4, 41, 42) d'un alésage (5, 51, 52) d'un cylindre (6, 61, 62) du moteur à combustion interne (3) au moyen d'un dispositif de traitement, comportant un corps de masquage (7) creux avec un segment de protection (72) et un segment de raccordement (71) pour le raccordement du corps de masquage (7) creux à l'alésage (5, 51, 52) du cylindre, ledit corps de masquage (7) creux étant configuré de telle sorte que le dispositif de traitement peut être guidé à travers le corps de masquage (7) creux, et le corps de masquage (7) creux, pendant le traitement de surface d'un premier cylindre (6, 61) du moteur à combustion interne (3), peut être positionné du côté de la chambre de vilebrequin avec le segment de raccordement (71) contre l'alésage (5, 51) du premier cylindre (6, 61), sachant qu'un diamètre extérieur maximum du corps de masquage (7) creux est inférieur à un diamètre du cylindre (6, 61, 62), de telle sorte que le corps de masquage (7) creux peut être introduit à l'intérieur de la chambre de vilebrequin (2) en passant par l'alésage (5, 51, 52) du cylindre, un élément d'assemblage (8) étant prévu pour la fixation du corps de masquage (7) à un carter de vilebrequin (21) de la chambre de vilebrequin (2).

2. Moteur à combustion interne selon la revendication 1, dans lequel le corps de masquage (7) creux est un cylindre creux (7).

3. Moteur à combustion interne selon la revendication 1 ou 2, dans lequel le corps de masquage (7) creux comprend un segment de fixation (73).

4. Moteur à combustion interne selon l'une quelconque des revendications précédentes, dans lequel le segment de fixation (73) est prévu entre le segment de raccordement (71) et le segment de protection (72).

5. Moteur à combustion interne selon l'une quelconque des revendications précédentes, dans lequel le segment de fixation (73) s'étend en forme d'entonnoir, en particulier en forme d'entonnoir s'effilant à partir du segment de raccordement (71) vers le segment de protection (72).

6. Moteur à combustion interne selon l'une quelconque des revendications précédentes, dans lequel le segment de raccordement (71) comprend une bague de recouvrement (74) assemblée de manière amovible.

7. Système de masquage destiné à masquer une chambre de vilebrequin (2) d'un moteur à combustion interne (3) selon l'une quelconque des revendications précédentes, sachant que pendant un traitement de surface d'une surface de roulement (4, 41, 42) d'un alésage (5, 51, 52) d'un cylindre (6, 61, 62) du moteur à combustion interne (3) au moyen d'un dispositif de traitement, la chambre de vilebrequin (2) peut être masquée par le système de masquage, et ledit système de masquage comprend un corps de masquage (7) creux avec un segment de protection (72) et un segment de raccordement (71) pour le raccordement du corps de masquage (7) creux à l'alésage (5, 51, 52) du cylindre, ledit corps de masquage (7) creux étant configuré de telle sorte que le dispositif de traitement peut être guidé à travers le corps de masquage, et le corps de masquage (7) creux, pendant le traitement de surface d'un premier cylindre (6, 61) du moteur à combustion interne (3) peut être positionné du côté de la chambre de vilebrequin avec le segment de raccordement (71) contre l'alésage (5, 51) du premier cylindre (6, 61), un diamètre extérieur maximum du corps de masquage (7) creux étant inférieur à un diamètre du cylindre (6, 61, 62), de telle sorte que le corps de masquage (7) creux peut être introduit à l'intérieur de la chambre de vilebrequin en passant par l'alésage (5, 51, 52) du cylindre, et un élément d'assemblage (8) étant prévu pour la fixation du corps de masquage (7) sur un carter de vilebrequin (21) de la chambre de vilebrequin (2).

8. Procédé destiné à masquer une chambre de vilebrequin (2) d'un moteur à combustion interne (3) au moyen d'un système de masquage (1) pendant un traitement de surface d'une surface de roulement (4, 41, 42) d'un alésage (5, 51, 52) d'un cylindre (6, 61, 62) du moteur à combustion interne (3) au moyen d'un dispositif de traitement, lequel système de masquage (1) comprend un corps de masquage (7) creux avec un segment de protection (72) et un segment de raccordement (71), et ledit corps de masquage (7) creux, pendant le traitement de surface d'un premier cylindre (6, 61) du moteur à combustion interne (3), est positionné du côté de la chambre de vilebrequin avec le segment de raccordement (71) contre l'alésage (5, 51) du premier cylindre (6, 61), et pendant le traitement de surface le dispositif de traitement étant guidé au moins temporairement à travers le corps de masquage, sachant qu'un diamètre extérieur maximum du corps de masquage (7) creux est choisi plus petit qu'un diamètre du cylindre (6, 61, 62), et le corps de masquage (7) creux est introduit à l'intérieur de la chambre de vilebrequin en passant par l'alésage (5, 51, 52) du cylindre, un élément d'assemblage (8) étant prévu pour la fixation du corps de masquage (7) sur un carter de vilebrequin (21) de la chambre de vilebrequin (2).

9. Utilisation d'un système de masquage selon la revendication 7 ou d'un procédé selon la revendication 8, le processus de revêtement thermique étant un procédé de projection par plasma.

10. Utilisation d'un système de masquage selon la revendication 7 ou d'un procédé selon la revendication 8, le processus de revêtement thermique étant un procédé de projection par chalumeau.

11. Utilisation d'un système de masquage selon la revendication 7 ou d'un procédé selon la revendication 8, le processus de revêtement thermique étant un procédé de projection par arc électrique entre deux fils.
